Europäisches Patentamt

European Patent Office

Office européen des brevets

(11) Publication number: **0 381 499**
**A2**

# EUROPEAN PATENT APPLICATION

(21) Application number: **90301058.5**

(22) Date of filing: **01.02.90**

(51) Int. Cl.5: **F16C 33/04**

(30) Priority: **03.02.89 US 307848**

(43) Date of publication of application:
**08.08.90 Bulletin 90/32**

(84) Designated Contracting States:
**AT BE CH DE DK ES FR GB GR IT LI LU NL SE**

(71) Applicant: **DANLY INTERNATIONAL, S.A.**
**19/21 Rue Capouillet**
**B-1060 Brussels(BE)**

(72) Inventor: **Danly, Sr. James C.**
**1418 Clinton Place**
**River Forest, Illinois 60305(US)**

(74) Representative: **Crawford, Andrew Birkby et al**
**A.A. THORNTON & CO. Northumberland**
**House 303-306 High Holborn**
**London WC1V 7LE(GB)**

(54) **Composite and self-lubricating bushing.**

(57) A composite and self-lubricating bushing (10) comprises a monolithic steel body (12) having a machined internal cylindrical surface (16) and a porous bearing layer (23) applied to the surface. The porous bearing layer (23) is formed by compacting and sintering a particulate bearing material. The steel body (12) may also include a cavity (14) for storing lubricant and at least one passageway (18) extending between the cavity and the internal cylindrical surface. The bushing may be fabricated by positioning the steel body concentrically over an elastomeric plug (48), charging the annular cavity between the body and the plug with a sinterable particulate, expanding the elastomeric plug diametrically to compact the particulate, removing the plug (48) and heating the bearing body and compacted particulate.

FIG. 1

## Composite and Self-Lubricating Bushing and Method for Making Same

The present invention relates to bushings and, more particularly, to a composite and self-lubricating bushing for use in die sets, presses and other heavy duty machinery. The invention also relates to a method for the manufacture of a cylindrical bearing surface finding advantageous use in such a bushing.

It is well known in the tool and die industry that long-lasting, precision bushings are an important component in the design of commercially acceptable die sets. Because these bushings are often subjected to high press velocities and substantial side thrust forces, it is necessary that they be formed from a monolithic block and that they be carefully constructed to exacting specifications. Two types of plain guide bushings are well known to the art and normally available from most die set manufacturers, namely hardened steel bushings and plated bushings in which a thin layer of bronze is plated in the bore of a steel bushing. In either case, the bushing is closely fitted to a hardened and ground guide post with a diametral clearance ranging from about 0.0003 to 0.0008 inches. Blanking and piercing dies must be closely fitted to avoid shearing the cutting edges, while forming dies will work well with larger clearances.

Hardened steel bushings are widely used at present and, when properly lubricated and maintained in alignment, will provide excellent service and wear life at moderate press speeds. For applications with higher speeds or higher side loads, bronze plated bushings are preferred because they reduce chances of galling or siezing. These bronze plated bushings must also be lubricated regularly to avoid failure.

Some prior art dies, where greater pin and bushing clearance can be tolerated, may be fitted with solid bronze bushings inserted into the steel or iron body of the die. These bushings are more tolerant of dirt or fine metal particles which find their way into the space between the guide post and bushing and become embedded in the bronze. A plated bushing would have too thin a layer of bronze to accept anything but the finest of foreign particles and the hardened steel bushing would be even less tolerant. The disadvantages of solid bronze are lower mechanical strength and a coefficient of expansion significantly greater than that of steel. Thus, as the bushing heats in service it tends to close in on the guide post adding to the heating problem. Sufficient clearance and lubrication must be provided to avoid this problem.

It is well known to provide all of these prior art bushings with means for lubrication, such as a lubricating fitting so that grease or other lubricants may be periodically introduced to the internal bearing surface. However, under high velocity and extreme load conditions such lubricants are quickly dissipated; and if the tool operator is not diligent in the proper and periodic application of lubricant, it is possible that a bushing may sieze despite all of the foregoing design precautions. Thus, a need exists in the industry for a quality bushing for use in die sets and in other high load applications which is capable of self-lubrication for extended periods of service.

One of the important properties of bronze as a bearing material is its ability to conduct heat away from the bearing surface. For example, coefficients of heat transmission for bronze are about five times greater than steel. Therefore, a need exists for a bushing having a lining of bronze thick enough to conduct heat away but not so thick as to cause substantial reduction of the clearance between guide post and bushing.

Another well known bearing material is a porous sintered bronze which has the advantage of holding a lubricant in as much as 25% of its volume. However, all known prior art applications of such a sintered bronze have involved bearings fabricated from sheet stock. When formed into a bearing, the body of such bearings includes a separation line typically formed when the sheet stock is rolled into a cylindrical configuration. Thus, the resulting bushing is not a monolithic structure. Accordingly, these bearings are used only in commercial applications under conditions of moderate loads. They are not used as guiding elements in die sets primarily because of inferior strength and load carrying ability.

The present invention is therefore directed to a novel composite bushing which employs a monolithic steel body and a compacted and sintered porous bearing layer which is formed on an internally machined cylindrical surface of the steel body.

The present invention is also directed to a novel and uniquely constructed bushing which overcomes the disadvantages associated with the prior art by incorporating into the bushing itself a means for lubricating the bushing's internal bearing surface over extended periods of service. Thus, the bushing of the present invention comprises a cylindrical body including an internal cylindrical bearing surface, a cavity or reservoir for storing a liquid or semi-liquid lubricant, at least one passageway extending between the cavity and the bearing surface to permit the flow of lubricant from the cavity to the bearing surface, and finally a cover or casing which is mounted to and over the bushing body to enclose the cavity.

In accordance with a preferred embodiment of the invention the bushing also includes one or more recesses extending along the internal bearing surface and in communication with the passageway from the lubricant reservoir. This recess facilitates distribution of the lubricant on the internal bearing surface. In addition, the bushing body may also include an externally accessible filling port which communicates with the lubricant reservoir within the bushing body. Finally, the self-lubricating bushing may also include an internal bearing surface having a porous layer, and preferably a porous layer impregnated with a solid polymeric lubricant.

In accordance with the method of the present invention the internal cylindrical surface of the bushing is provided through a unique sequence of process steps with a porous bearing layer. First, a cylindrical elastomeric plug is positioned concentrically within the bearing body so that the internal cylindrical surface of the bearing body and the plug together form an annular cavity. Next, a sinterable particulate material is charged or introduced into the annular cavity. Once the cavity is filled, the elastomeric plug is expanded diametrically. This expansion results in a compaction of the particulate material against the internal cylindrical surface of the bushing body. The elastomeric plug is then permitted to return to its unexpanded original diameter, and removed from the bearing body. Finally, the bearing body with the compacted particulate adhering to its internal surface is heated, thereby sintering the particulate and forming a porous bearing layer on the internal cylindrical surface of the bushing.

In accordance with a preferred embodiment of this method, the particulate is compacted by longitudinally compressing the elastomeric plug. The plug's longitudinal compression results in its concomitant diametric expansion, thereby compacting the particulate against the bushing's internal surface. This method of compaction is particularly well suited to bushings in which the bore to which the sintered material is applied has a length many times greater, for example thirty times greater, than the thickness of the sintered layer.

Finally, the method of the present invention further contemplates the application of a polymeric lubricating material onto the porous bearing layer. This polymeric lubricant may be coated or sprayed onto the porous layer and is thereafter heated and compressed. As a result, the porous bearing layer is partially impregnated with the polymeric lubricant.

Accordingly, it is an object of the present invention to provide a composite bushing which is constructed from a monolithic steel body having a compacted and sintered bearing layer on its internally machined cylindrical surface.

Another object of the present invention is to provide a porous bearing layer in a steel housing which will provide strength, support and dimensional stability while the porous bearing layer provides for heat conductivity, and anti-siezing properties of a proper bearing material.

Another object of the present invention to provide a novel bushing construction which achieves an effective lubrication of the bushing's internal cylindrical surface over an extended period of service and without the need for frequent application of lubricating materials by the tool operator.

Still another object of the present invention is to provide a method for application of a porous bearing layer onto the internal cylindrical surface of a bushing which achieves a superior bearing layer quality and is cost effective.

The novel features which are believed to be characteristic of the invention are set forth in the appended claims. The invention itself, however, together with further of its objects and attendant advantages, will be best understood by reference to the following description taken in connection with the accompanying drawings in which:

FIGURE 1 is a cross-sectional view taken along the longitudinal center line of the bushing of the present invention;

FIGURE 2 is a cross-sectional view taken along line 2-2 of FIGURE 1;

FIGURES 3-6 illustrate the sequence of steps comprising the method of the present invention for the application of a porous bearing layer to the internal bearing surface of the bushing; and

FIGURE 7 is a cross-sectional view illustrating a bushing in exploded view relative to its associated guide post and in which the bushing includes a sintered bearing layer and the guide post includes a polymeric solid lubricant layer, which together provide a superior interface between the bushing and guide post.

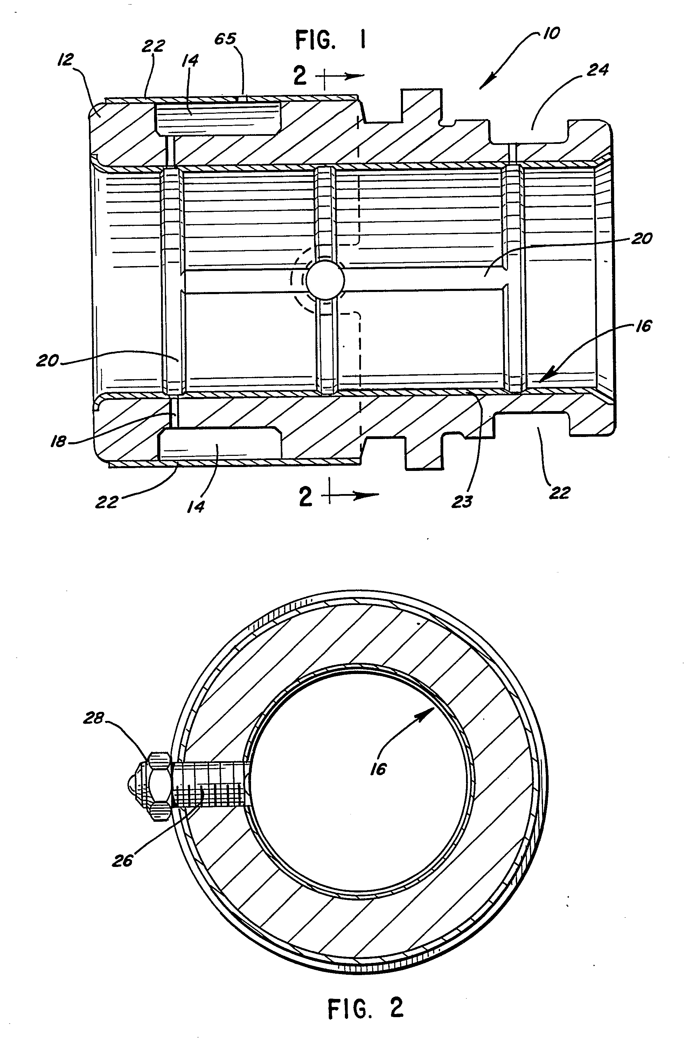

With reference now to FIGURES 1 and 2, the bushing of the present invention, designated generally as 10, is shown to include a monolithic body 12, a lubricant cavity or reservoir 14, an internal bearing surface 16, one or more internal passageways 18, at least one recess 20 in the bearing surface 16, and a cover 22 mounted to cylindrical body 12 in order to enclose the lubricant cavity 14.

The monolithic body 12 is preferably cylindrical and may be constructed from any one of a variety of materials well known to those of ordinary skill in the art. A particularly suitable material is steel. In accordance with one preferred embodiment of the invention, the machined cylindrical internal surface 16 supports a porous bearing layer 23 which is a compacted and sintered material, such as bronze, lead alloy, tin, tin alloy or other material well known to those of ordinary skill in the art. The internal surface 16 also includes one or more recesses 20 to facilitate the distribution of a lubricant. As illustrated in FIGURE 1, the recesses 20 may be positioned circumferentially or axially or in a network of both. In addition, the recesses may be angularly disposed or in a "figure eight" arrangement.

In accordance with an important objective of the present invention the cylindrical body 12 incorporates a lubricant cavity 14, and may optionally include one or more additional lubricant cavities, such as cavity 24 illustrated in FIGURE 1. Cavity 14 communicates with the internal bearing surface 16 by means of one or more passageways 18. Thus, as lubricant is consumed during the service life of the bushing, the lubricant stored in cavity 14 will flow from cavity 14 through passageway 18 and along the recesses 20. In this way, the interface between internal bearing surface 16 and the external surface of the complementary guidepost along which the bearing moves will be affectively and continuously lubricated. Cavity 14 may be most economically constructed by machining an annular recess in the external surface of body 12 and thereafter enclosing the machined recess with a cylindrical cover or casing 22. The casing may be press fit or bonded to body 12 in such a manner as to prevent leakage of lubricant. A small orifice 23 is also formed in casing 22 to prevent entrapment of air and to permit free flow of lubricant from cavity 14 through passageway 18 to the bearing surface 16.

As shown most clearly in FIGURE 2, the bushing 10 may also include an externally accessible filling port 26 having a conventional grease fitting 28. Filling port 26 is positioned in direct communication with one of the recesses 20 and through the network of recesses 20 and passageway 18 is in communication with cavity 14. Accordingly, the bushing may be refilled with lubricant simply by application of a conventional grease gun to grease fitting 28. The tool operator will be able to determine when cavity 14 is filled when excess lubricant begins to discharge from orifice 23.

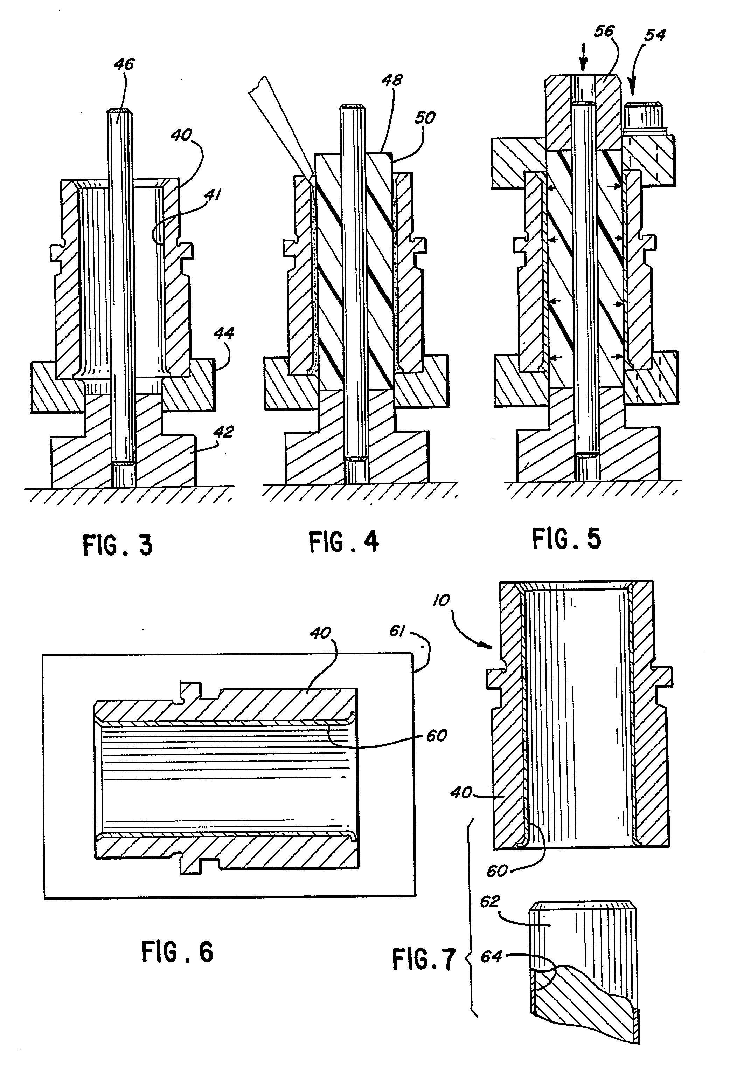

The method of the present invention is depicted in its various steps in FIGURES 3-6. As shown in FIGURE 3, a cylindrical bushing 40 is mounted in a suitable fixture including base 42, bushing mount 44 and a center pin 46. Next, an elastomeric plug 48 is located over pin 46 and positioned concentrically within bushing 40 thereby forming an annular cavity 47 between its external surface 50 and the internally machined cylindrical surface 41. The plug 48 is preferably constructed from a polyurethane elastomer and has a shore hardness of from about 80 to 120. Most preferably, the plug 48 has a shore hardness of about 95. Once the plug is properly positioned to form the annular cavity as just described, a sinterable particulate 52 is charged or introduced to the cavity by any of several means well known to those of ordinary skill in the art. The particulate material may also be any of a number of well known sinterable powders useful for such purposes. One such common bronze powder is composed of 90% by weight copper and 10% by weight tin. Of course, the precise composition of the particulate will depend upon the specific application in which the bearing or bushing is to be used.

Having filled cavity 47 with a suitable amount of sinterable particulate, a press 54 is placed over the bushing and elastomeric plug. The press includes a center ram 56 which longitudinally compresses the elastomeric plug 48 thereby causing its diametric expansion toward the internal cylindrical surface 41 of the bushing 40. As a consequence of this diametric expansion, the particulate is compacted against the internal surface 41 to a prescribed density. When compaction of the particulate is complete the ram 56 is released thereby permitting the elastomeric plug 48 to return to its original length and diameter. After removing the elastomeric plug from the bushing 40, the bushing together with its compacted particulate layer is placed in a suitable sintering oven 58 under conditions well known to those of ordinary skill in the art and is heated to a temperature necessary for sintering the particulate into a fused porous bearing layer 60. Preferably, the layer 60 has a thickness of about 0.010 to 0.030 inches. The resulting composite bushing exhibits all of the well-recognized advantages of machined steel bushings with the added advantages associated with a porous bearing layer on its internal bearing surface. This layer has a lower coefficient of friction than steel and has a greater porosity than prior art plated bushings such that lubricants are more readily retained at the internal bearing surface.

As noted earlier it is also desireable to apply a polymeric lubricant to the porous bearing layer. Many such polymeric lubricants are well known in the art, and any suitable composition may be used. For example, satisfactory lubricants are described in United States Patents Nos. 3,882,030; 3,878,113; 4,115,283 and 4,575,429. The disclosures of each of these United States patents is incorporated herein by reference. Such lubricants may be coated or sprayed onto the porous layer and then "cured" by the use of a heated platen. By applying both heat and pressure to the polymeric lubricant, it will be impregnated into the surface of the porous bearing layer thereby enhancing the lubricity of the bearing surface, particularly during the initial start-up period of the bearing or bushing production run.

FIGURE 7 illustrates an alternative embodiment of the present invention in which the bushing 10 includes a porous bearing layer 60 and the bushing's associated guide post 62 includes a polymeric lubricant layer 64. The guide post 62 is formed from hardened steel and typically has its external surface ground to a precise diameter complimentary to the inside diameter of the bushing. The polymeric lubricant layer may be composed of any of the lubricants described above and may have a thickness of less than about 0.0001 inches. This alternative embodiment has the advantage that it is much easier and less costly to apply the polymeric lubricant to the external surface of the guide post rather than to the internal surface of the bushing.

Those skilled in the art will recognize that the bushing of the present invention provides an advantage over prior art bushings in that operator lubrication of the bushing is necessary much less frequently, in fact, on only an extended periodic basis. As a result, such lubrication may be performed during routine maintenance or changeover of the die set for a new job. Since lubrication will most likely not be required during the press run of a specific job, the likelihood of a bushing seizing during the service period is much less likely. Those skilled in the art will also recognize that the method of the present invention is extremely simple and permits the application of a sintered porous bearing layer to the bushing in a fast and cost-effective manner.

While particular embodiments of the invention have been described above, it will be obvious to those of skill in the art that changes and modifications may be made without departing from the invention in its broader aspects. Therefore, the object of the appended claims is to cover all such changes and modifications which fall within the true spirit and scope of the invention.

## Claims

1. A composite bushing, comprising:
a monolithic steel body having a machined internal cylindrical surface; and a porous bearing layer applied to said internal cylindrical surface, said bearing layer comprising a compacted and sintered particulate material.

2. The composite bushing of claim 1 wherein said particulate material is selected from the group consisting of a bronze powder, a lead alloy powder, a tin powder or a tin alloy powder.

3. The composite bushing of claim 1 wherein said particulate material is bronze powder, which comprises 90% by weight copper and 10% by weight tin.

4. A composite bushing of any preceding claim wherein said bearing layer is compacted to a higher density at each end of the cylindrical internal surface of said body.

5. A composite bushing and guide post assembly comprising:
a monolithic steel body according to any of the preceding claims; and
a monolithic hardened steel guide post having a machined external cylindrical surface and a solid polymeric lubricant layer applied to said external cylindrical surface.

6. A self-lubricating bushing, comprising:
a body including an internal cylindrical bearing surface, a cavity for storing lubricant, and at least one passageway between said cavity and said bearing surface to permit the flow of lubricant from said cavity to said bearing surface; and
a cover mounted to said body to enclose said cavity.

7. The bushing of claim 6 wherein said body also includes at least one recess on said bearing surface, said recess being aligned with said one passageway to facilitate distribution of said lubricant on said bearing surface.

8. The bushing of claim 7 wherein said recess extends circumferentially on said bearing surface.

9. The bushing of claim 7 or 8 wherein said recess extends axially on said bearing surface.

10. The bushing of claim 7, 8 or 9 wherein said recess extends on an angle to the longitudinal axis of said bushing.

11. The bushing of any of claims 6-10 wherein said body also includes an externally accessible filling port in communication with said cavity.

12. The bushing of any of claims 6-11 wherein said cover comprises a cylindrical casing.

13. The bushing of any of claims 6-12 wherein said internal bearing surface comprises a porous layer.

14. The bushing of any of claims 1-5 or claim 13 wherein said porous bearing layer is impregnated with a solid polymeric lubricant.

15. A method of fabricating a cylindrical bearing surface comprising the steps of:
positioning a cylindrical elastomeric plug concentrically within a bearing body having a cylindrical internal surface, thereby forming an annular cavity between said plug and said body;
charging said annular cavity with a sinterable particulate;
causing said plug to expand diametrically, thereby compacting said particulate against said cylindrical internal surface of said body;
permitting said plug to return to its unexpanded original diameter;
removing said plug from said bearing body; and
heating said bearing body to sinter said compacted particulate and to form a porous bearing layer on said cylindrical internal surface.

16. The method of claim 15 wherein said plug diametrically expanded by application of longitudinal compression forces to said plug.

17. The method of claim 15 or 16 wherein said particulate is a metal powder.

18. The method of claim 15, 16 or 17 wherein said particulate is selected from the group consisting of a bronze powder, a lead alloy powder, a tin powder or a tin alloy powder.

19. The method of any of claims 15-18 wherein said plug has a shore hardness of between about 80 and 120.

20. The method of claim 19 wherein said plug is polyurethane.

21. The method of claim 20 wherein said shore hardness is about 95.

22. The method of any of claims 15-21 further comprising the steps of:
applying a lubricating material including a polymeric lubricant onto said porous bearing layer; and heating and compressing said lubricating material to thereby partially impregnate said porous bearing layer with said polymeric lubricant.

FIG. I

FIG. 2

FIG . 3

FIG . 4

FIG . 5

FIG . 6

FIG . 7